# EUROPEAN PATENT APPLICATION

(11) **EP 3 282 411 A1**
(43) Date of publication of application: **14.02.2018**
(21) Application number: 17185079.5
(22) Date of filing: 07.08.2017
(51) Int. Cl.: G06Q 10/08

(54) **LOCALIZATION SYSTEM AND METHOD**

(30) Priority: 08.08.2016 US 201662372176 P
(71) Applicant: Posttag Limited, London EC4M 9ET (GB)
(72) Inventor: LEWIN, Keith, Witham, CM8 3EN (GB)
(74) Representative: Scintilla Intellectual Property Ltd

(57) **Abstract**

A localization system and corresponding method are provided for order fulfilment, such as delivery of parcels by the postal services. A traditional postal code is enhanced with an additional token which specifies a precise location. The token can be defined by a customer during a checkout process and used by the postal services to accurately identify the precise location for fulfilment of the order.

## Description

The present disclosure relates to localization systems and methods, and in particular to localization systems and methods for order fulfilment where a specific location needs to be found.

### BACKGROUND

There are various logistical functions where a physical location needs to be identified by a fulfilment agent who visits that location, to fulfil an order. Non-limiting examples include the delivery of a letter or package by a delivery person or machine to a home or business premises, the visit to a site by a tradesperson such as a plumber or electrician, or a visit by a worker to a location which requires attention, such as a streetlight that needs repair or an object which might not be associated with a domestic or commercial premises, but which requires repair, maintenance or monitoring.

An order in this context is a request for provision of goods or services from an organization. Fulfilment of the order may be carried out by a fulfilment organization, which may be another external organization or may be part of the organization which offers to provide the goods or services. Goods or services can be requested by external customers who may be business or consumer clients of the organization, or by internal clients being members of the organization who submit orders.

When it is needed to deliver goods to a given location or to carry out services at a given location, a fulfilment agent (who may be part of the fulfilment organization) has to be provided with the appropriate address.

In many countries, postal codes are used to help sort mail. A postal code is most commonly associated with a specific geographic area, and comprises a series of letters and/or numbers which are arranged in a specific format. The format and composition of postal codes varies from country to country, and postal codes are referred to by various different names including "zip code" in the United States of America, "post code" in the United Kingdom of Great Britain and Northern Ireland, "PLZ" in Germany, and so on.

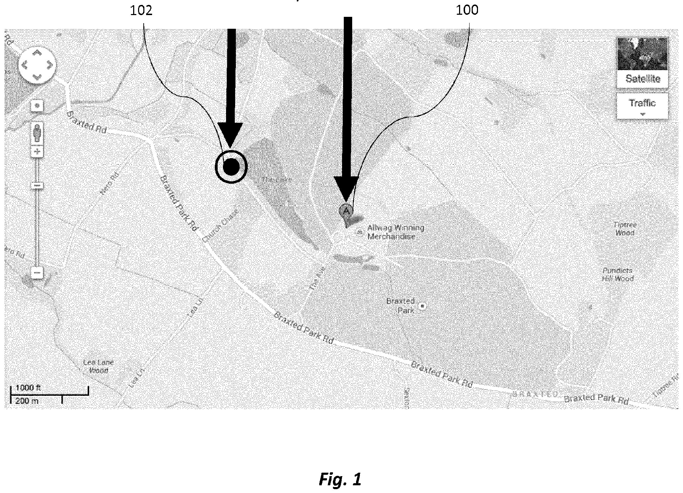

Because a postal code specifies a given geographical area, it can be shared by multiple addresses, and so a given building is usually identified by its postal code in combination with its street number and street name. While this system works well for many addresses, there are also many addresses where the current postcode system is flawed. For example, in rural areas in the UK a single postcode can cover an area as large as one square kilometre. Analysis of postal address data from the UK postal service company Royal Mail indicates that approximately one in six homes in the UK do not conform to a conventional street and number format. Figure 1 illustrates the problem, for a real UK address: "Lake Lodge, Braxted Park Road, Witham, Essex, CM8 3EN". As is typical for many rural addresses, the formal address has no house number. The postcode, CM8 3EN, simply points to the centre of the relevant geographical area, position 100 indicated by pin "A". However, the actual location 102 of the house is nearly 500m away. If a fulfilment agent attempts to find this address, for example to deliver a letter or a package, she will struggle to find the correct place to fulfil the order. If the fulfilment agent uses a global navigation satellite system such as the Global Positioning System (GPS) or equivalent, she will enter the postcode and be guided not to the correct precise location but to the centre of the postcode geographical area. This example is in the UK, but it will be appreciated that similar problems exist in the US and in all other countries, even for the most sophisticated postal code systems.

These "hard to find" addresses cause a number of significant problems. Deliveries which are lost or delayed result in reduced efficiencies for the organizations which provide or offer to provide goods and services. Where these organizations are commercial entities, these lost efficiencies translate directly to loss of revenue. In particular, as organizations move towards increased online trading, delivery and logistics can become their largest overhead and the greatest source of competitive weakness. This "last mile" is where the most money is wasted. Deliveries which are lost or delayed also cause frustration and inconvenience for parties who are waiting for the delivery. Similarly, delays or failures to fulfil other types of orders can cause frustration and inconvenience to third parties.

### SUMMARY OF THE DISCLOSURE

According to a first aspect of the disclosure there is provided a localization system arranged to: receive a postal code and additional localization information from a first party; generate a token based on the additional localization information; and output the token for use by a second party.

A localization system provides features which enable a first party and a second party to exchange precise location information. The system may comprise various modules which implement these characteristics: an input module which receives the postal code and additional localization information; a token generation module that generates a token; and an output module which outputs the token. The input module and output module may be implemented together as an interface, and the token may be stored in a token repository comprising any suitable memory for retrieval by the interface when it receives a request.

Optionally, the additional localization information comprises a set of geo-spatial coordinates.

Optionally, the system comprises an interface for provision of the postal code and the geospatial coordinates, said interface comprising an interactive digital map.

Optionally, the interactive digital map allows the first party to select a point on the map, and said map generates a set of geo-spatial coordinates based on the selection of a point that is made by the first party.

Optionally, the token comprises a short string of characters.

Optionally, the string of characters is associated with a postal code to form an extended form postal code.

Optionally, the extended form postal code comprises a control character interposed between a first portion comprising a standard postal code and a second portion comprising the token.

According to a second aspect of the disclosure there is provided a method of sharing location information between a first party and a second party wherein: the first party sends a postal code and additional localization information to a localization system; and the localization system generates a token based on the additional localization information and outputs the token to the second party.

According to a third aspect of the disclosure there is provided a method of fulfilling an order for goods or services to be provided at a desired location, wherein a first party places the order with an organization and provides a postal code and additional localization information; the method comprising: generating a token based on the additional localization information; providing the token to a fulfilment agent; and wherein the fulfilment agent decodes the token and uses the postal code and the additional localization information to find the desired location.

According to a fourth aspect of the disclosure there is provided a non-transitory computer program product comprising instructions that, when executed by a computing device enable it to receive and decode a token; by interacting with a localization system which receives a postal code and additional localization information from a first party and generates the token based on the additional localization information.

The computer program product may be stored on or transmitted as one or more instructions or code on a computer-readable medium. Computer-readable media includes both computer storage media and communication media including any medium that facilitates transfer of a computer program from one place to another. A storage media may be any available media that can be accessed by a computer. By way of example such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fibre optic cable, twisted pair, digital subscriber line (DSL), or wireless technologies such as infra-red, radio, and microwave, then the coaxial cable, fibre optic cable, twisted pair, DSL, or wireless technologies such as infra-red, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media. The instructions or code associated with a computer-readable medium of the computer program product may be executed by a computer, e.g., by one or more processors, such as one or more digital signal processors (DSPs), general purpose microprocessors, ASICs, FPGAs, or other equivalent integrated or discrete logic circuitry.

### BRIEF DESCRIPTION OF THE DRAWINGS

The disclosure will be described below, by way of example only, with reference to the accompanying drawings, in which:
Figure 1 shows a location of a premises on a map indicated by a postal code as compared with the actual location of the premises;
Figure 2 shows the processing of an order in an example scenario of a retailer receiving an order from a consumer for a product to be delivered to their home;
Figure 3 shows the scenario of figure 2, modified to include an additional localization system;
Figure 4 shows an example architecture of a localization system according to an embodiment of the disclosure;
Figure 5 illustrates an example process for the generation of a token;
Figure 6 shows an example of how the system of the disclosure may be integrated with a website which accepts orders from consumers for delivery of goods to their homes or businesses; and
Figure 7 shows an illustrative screen shot from the process of figure 6.

### DETAILED DESCRIPTION

The present disclosure provides for a token to be associated with a postal code so that additional information can be accessed to assist with order fulfilment. The token may be a representation of or a reference to the additional information. The token may comprise a pointer or other reference for retrieving the additional information from another source.

The additional information may comprise localization information supplementing the basic localization information provided by the postal code. It may identify a specific location which may be a point or area which is defined with a level of accuracy that is greater than that which is provided by the postal code, or may identify a point or area which is different from an area or a representative point (such as a centre point) of an area defined by the postal code.

The additional information may be a set of geo-spatial coordinates, or may comprise other information such as text, pictures or video which provide localization information supplementing basic localization information provided by the postal code to provide additional and/or more accurate geospatial information or to provide other information such as instructions for assisting with order fulfilment.

The supplementary localization information provided by the additional information may comprise a specific location which is defined to a level of accuracy greater than that which is provided by the postal code. The specific location will generally comprise a point or area within a wider geographical area bounded by the postal code.

The token and postal code may together form an extended form postal code, which can be printed or otherwise recorded on physical labels or documents, and which can be used as an input for various computer systems. The token is preferably easy for a person to read and input and for this purpose would preferably comprise a short string of numbers, letters or symbols.

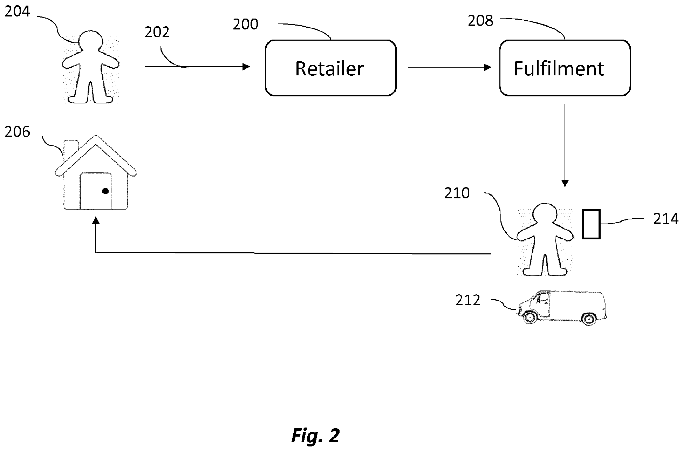

Figure 2 shows the processing of an order in an example scenario of a retailer 200 (who may be an online retailer) receiving an order 202 from a consumer 204 for a product to be delivered to their home 206. The retailer 200 engages a fulfilment organization 208 to carry out the delivery of the order. A fulfilment agent 210 drives a vehicle 212 and is provided with a device 214 which comprises a digital map and preferably has a transceiver for communication with a global navigation satellite system (GNSS). The device 214 may comprise a mobile device such as a smartphone or tablet which can be programmed with suitable mapping applications. Alternatively, the device 214 may be integrated within the delivery vehicle, being for example an integrated navigation system.

The delivery agent 210 may also carry additional devices such as a mobile electronic proof of delivery system which may comprise various mechanisms such as a scanner and input screen for collecting the signature of the consumer 204, and which may integrate with point of sale (POS) and other systems of the fulfilment organization or the retail organization. In an alternative embodiment, the device 214 having a digital map and/or GNSS transceiver may be integrated with handheld devices of this type.

When the consumer 204 creates an order they enter their address, which will include their postal code. This postal code is used by the systems of the retailer 200 and fulfilment organization 208 to process the order.

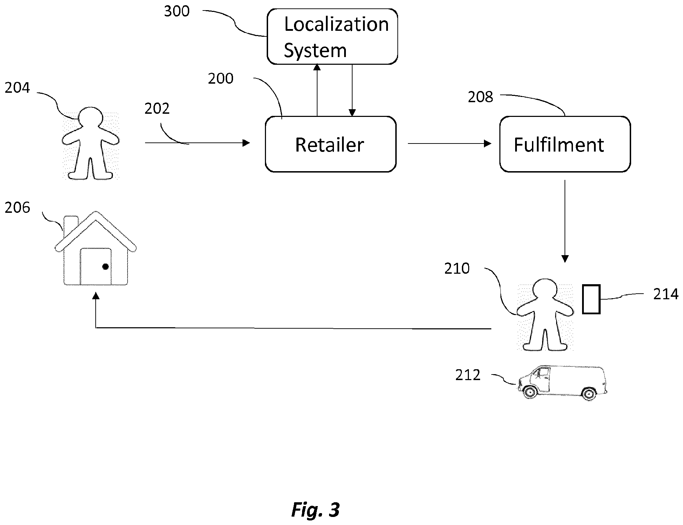

Figure 3 shows the scenario of figure 2, modified to include an additional localization system 300. In this example, the retailer 200 interacts with the localization system 300 to generate additional information which can be linked with the consumer or with a specific order, and to generate a token which represents the additional information and which is associated with a postal code. The token and the postal code together form an extended postal code which can be processed by the systems of the retailer 200 and fulfilment organization 208 in a similar manner as for normal postal codes. However, the token enables access to the additional information as will be described below.

Here, the localization system 300 is illustrated as a separate component and could be managed by a third party separate from the retailer, but it will be appreciated that it could be integrated with the retailer's systems and could be managed by the retailer directly. The localization system 300 is shown in this diagram as being used by the retailer 200, but in fact could be used by other parties including the fulfilment agent 210 using the device 214.

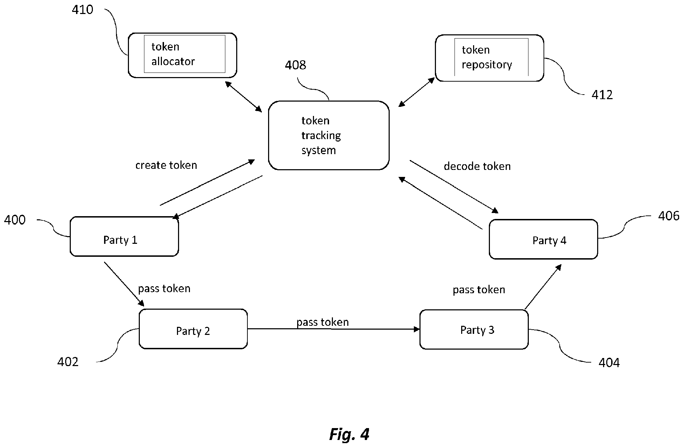

Figure 4 shows an example architecture of a localization system according to an embodiment of the disclosure, showing how various parties 400, 402, 404, 406 interact with a localization system. The parties can interact with a token tracking system 408. When a party needs to share location information, they connect to the central token tracking system 408 providing a standard postal code and additional geo-location coordinates of a point near or within the area of that postal code. The central token tracking system 408 examines the geo-location coordinates, validates that they are in the relevant postal code area, and then allocates a token that can be used to reference the specified geo-location coordinates in a compact form.

The token may be represented as a short string, typically comprising an integer number with a fixed number of digits (typically 3). The short string could be allocated randomly but could also encapsulate the location coordinates, typically representing the location (for example, in DMS (degree, minute, second) or DD (decimal degree) latitude and longitude coordinates, or in cartesian or polar coordinates) relative to the centre of the postcode area and then encapsulating such coordinates into a short string or integer using standard cipher algorithms.

The token and postal code may together form an extended form postal code. A control character (such as'#', or any other chosen special character) could be interposed between the postal code and the token. The control character is interpreted by a computing system and causes it to perform a given function, thus demarcating the postal code from the token. The control character also makes it easy for a person to understand the distinction between the postal code and the token when viewing a printed extended form postal code.

The token tracking system 408 then permanently records the allocated token and the corresponding postal code and geo-location coordinates in a repository 412, and can return the token to the calling party.

Once the token has been returned to the calling party, they can use it whenever a standard postal code is used, typically as part of a postal address. The extended form postal code is compatible with many computer systems that store and transmit postal codes.

When a party with no knowledge of the existence of the token system needs to retrieve the geo-location information associated with a token, they would utilize the postal code while ignoring the extended token string. The postal code would still provide them with an approximate location. This makes the tokens not only backwards-compatible with systems that store and transmit traditional postal codes, but also with parties and systems that retrieve location information from traditional postal codes.

When a party with knowledge of the existence of the localization system needs to retrieve the geo-location information associated with a token, they can connect to the central token tracking system 408 requesting the geo-location information associated with that particular token. The central token tracking system 408 would retrieve the information and return it. This means that tokens carry additional, more accurate geo-location information which is accessible to parties that know how to access it.

As also shown in the figure, tokens can be passed between parties, and parties may either create or decode tokens as needed.

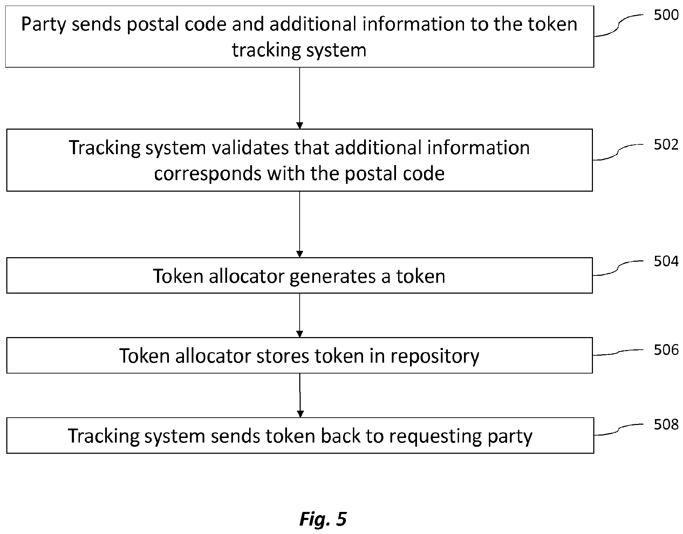

Figure 5 illustrates an example process for the generation of a token. At step 500, a party sends a postal code and additional information to the token tracking system.

The additional information may comprise geo-spatial coordinates. These geo-spatial coordinates can be generated in any suitable way. One preferred way of generating the geo-spatial coordinates which is particularly suitable is by use of a digital map. A user can be presented with a map which displays an area related to the postal code. The user can preferably perform panning and zooming actions to select a particular point on the map, which the underlying map software translates to a given set of geo-spatial coordinates and can provide those coordinates as an output.

In alternative embodiments, the additional information may comprise pictures, video, or text with information or instructions.

At step 502, the tracking system validates that the additional information corresponds with the postal code. Where the additional information comprises geo-spatial coordinates, this step may comprise verifying that the geo-spatial coordinates lie within a wider geographic area defined by the postal code.

If the verification is successful, the token allocator 410 generates a token (step 504), stores it in a repository (step 506) and optionally sends the token back to the requesting party (step 508). This last step is optional because the token may be returned to a different party from that which requests it, or the token does not need to be returned at all - it can be kept by the localization system and read by the other parties as and when they need access.

Because of its backwards-compatible nature the system of the present disclosure can be integrated into existing computer ordering and fulfilment systems (such as e-commerce and parcel delivery systems) with minimal changes and minimal disruption. The system may also provide optional features and APIs to allow a deeper integration if desired.

A website can integrate the localization system at the point where visitors input a postal address. This may be a delivery address or some other address.

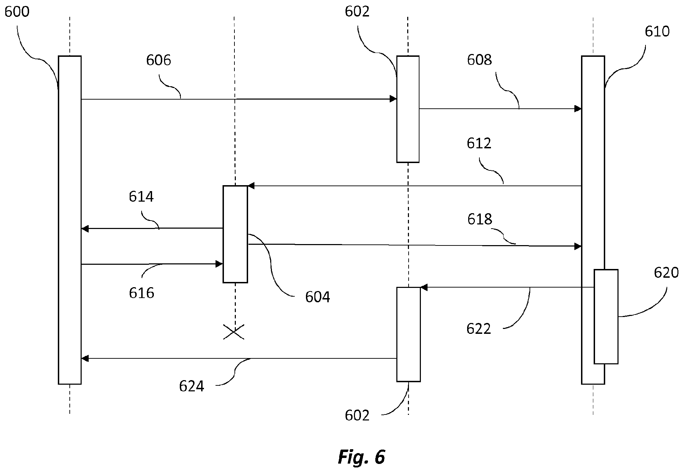

Figure 6 shows an example of how the system of the disclosure may be integrated with a website which accepts orders from consumers for delivery of goods to their homes or businesses. A consumer 600 interacts with a website 602 of the organization. The website 602 hosts a component 604 which forms part of the localization system of the present disclosure. The component 604 may be embedded as part of the website 602 by any appropriate technology, and provides an information capturing component for capturing localization information which is additional to or supplements the location information provided by a postal code. In this embodiment, the information capturing component comprises a mapping module which allows a user to select a point on a map in order to generate a set of geospatial coordinates.

During a checkout process or at some other point the consumer may be prompted to generate additional location information. Once make a request 606 to view the component, the website 602 passes a request 608 to the localization system service 610 to load the component. The request may comprise the postal code and other information identifying the consumer and the transaction, with appropriate anonymization. The service 610 then sends content 612 for the component, which may suitably be an inline frame defined by an HMTL <iframe> tag although other markup languages and technologies could be used. URL parameters used when the inline frame is loaded could supply the service 610 with an ID to identify the transaction or visitor affected. The component 604 then displays 614 a map with which the user can interact 616 to choose a specific location to be represented by the token. The component 604 then sends the geo-spatial coordinates 618 to the service 610 and these are used to generate 620 a token. This token can be sent 622 back to the website 602, using a callback URL if provided and passing the new token and the transaction or visitor IDs as parameters. The site 602 can also display a confirmation 624 for the user 600.

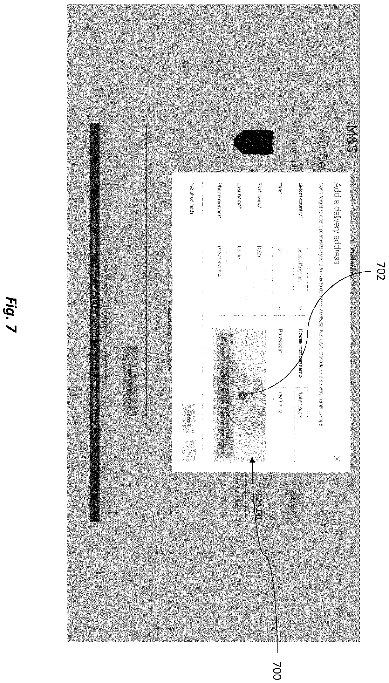

Figure 7 shows an illustrative screen shot from the process of figure 6. Here, the component 604 is displaying 614 a map 700 for the user, together with instructions that are overlaid on the map and read "This is where your post code is pointing us to. Now move the map to pinpoint your exact front door location". The map 700 displays a pointer 702 which the user can move as described. The overlaid message can be removed once the user starts to interact with the pointer. The user can use their normal pointing device (mouse, trackpad, etc) or their finger to drag the pointer to the desired location before confirming.

Embedding a component in the manner shown in figures 6 and 7 makes sure that the website experience is smooth and that the visitor can continue with the transaction on the original website after having selected their location and having obtained a token for it.

Once integrated with an e-commerce website, because the localization service is being invoked for every delivery to determine the delivery address, it can also be optionally used to provide a way to track and manage deliveries. The service may provide an application programming interface (API) that can allow the management of active parcels and of the delivery process, including for example managing the allocation of parcels to delivery drivers.

The format of the tokens of the present disclosure makes them compatible with most systems based on postal addresses, so once a customer has selected a token for its location the token is passed along with the postal address across the entire IT chain and when the person responsible for the fulfilment receives it, the token is available as part of the postal address to determine the location with an extra degree of accuracy (compared with the standard postal address). The fulfilment agent could for example be a driver delivering a parcel, a plumber visiting a property for a repair, or a council worker going to repair a street light.

Once the fulfilment agent 210 receives an address that contains a token, they can look it up in the localization system by visiting a website provided by the localization service provider or by using a dedicated application which can be installed on their device 214. If a deeper integration is desired, the computer system that the fulfilment agent 210 is using to navigate to their destination could call the token tracking system 300 directly to retrieve the geo-location information associated with the token. That level of integration would be expected in the case of parcel deliveries if the localization system is also used to help to track and manage active parcels.

If the navigation software is not integrated with the localization system, and if the fulfilment agent 210 is not aware of the localization system and does not recognize the token, they can still reach their destination normally by ignoring the extra string appended at the end of the extended form postal code and treating the extended form postal code as a standard postal code. In doing so they would lose the more accurate location information provided by the token and so reaching their destination might take longer than it would otherwise have, but it would still be possible to do it.

Among other things, the present disclosure provides a new solution to the problem of having one party share precise geo-location information with other parties. Existing methods normally used to exchange geo-location information include postal addresses and geo-location coordinates (such as GPS coordinates). Unfortunately, postal addresses are not accurate enough, and geo-location coordinates are rarely practical in human-facing systems because they are prone to copy and paste errors when they are typed by humans across computer systems. The disclosure addresses these issues in a new way while still requiring minimal changes to the computer systems normally used to store and transmit geo-location information.

Various modifications and improvements can be made to the above without departing from the scope of the disclosure.

It should be understood that the logic code, programs, modules, processes, methods, and the order in which the respective elements of each method are performed are purely exemplary. Depending on the implementation, they may be performed in any order or in parallel, unless indicated otherwise in the present disclosure. Further, the logic code is not related, or limited to any particular programming language, and may comprise one or more modules that execute on one or more processors in a distributed, non-distributed, or multiprocessing environment.

While aspects of the invention have been described with reference to at least one exemplary embodiment, it is to be clearly understood by those skilled in the art that the invention is not limited thereto. Rather, the scope of the invention is to be interpreted only in conjunction with the appended claims and it is made clear, here, that the inventor(s) believe that the claimed subject matter is the invention.

## Claims

1. A localization system arranged to:
receive a postal code and additional localization information from a first party;
generate a token based on the additional localization information; and
output the token for use by a second party.

2. The system of claim 1, wherein the additional localization information comprises a set of geo-spatial coordinates.

3. The system of claim 2, comprising an interface for provision of the postal code and the geospatial coordinates, said interface comprising an interactive digital map.

4. The system of claim 3, wherein the interactive digital map allows the first party to select a point on the map, and said map generates a set of geo-spatial coordinates based on the selection of a point that is made by the first party.

5. The system of any preceding claim, wherein the token comprises a short string of characters.

6. The system of claim 5, wherein the string of characters is associated with a postal code to form an extended form postal code.

7. The system of claim 6, wherein the extended form postal code comprises a control character interposed between a first portion comprising a standard postal code and a second portion comprising the token.

8. A method of sharing location information between a first party and a second party wherein:
the first party sends a postal code and additional localization information to a localization system; and
the localization system generates a token based on the additional localization information and outputs the token to the second party.

9. A method of fulfilling an order for goods or services to be provided at a desired location, wherein a first party places the order with an organization and provides a postal code and additional localization information; the method comprising:
generating a token based on the additional localization information;
providing the token to a fulfilment agent;
and wherein the fulfilment agent decodes the token and uses the postal code and the additional localization information to find the desired location.

10. A computer program product comprising instructions that, when executed by a computing device enable it to receive and decode a token; by interacting with a localization system which receives a postal code and additional localization information from a first party and generates the token based on the additional localization information.
